# EUROPEAN PATENT APPLICATION

(11) **EP 3 660 293 A1**
(43) Date of publication of application: **03.06.2020**
(21) Application number: 18209233.8
(22) Date of filing: 29.11.2018
(51) Int. Cl.: F02C 3/30, F02C 9/18, F23R 3/06

(54) **METHOD FOR MONITORING THE FUNCTION OF BYPASS VALVES IN A GAS TURBINE PLANT AND GAS TURBINE PLANT**

(71) Applicant: Siemens Aktiengesellschaft, 80333 München (DE)
(72) Inventor: Berg, Anton, 59034 Tjällmo (SE)

(57) **Abstract**

The invention relates to a method for monitoring the function of bypass valves (24) in a gas turbine plant (2) comprising a compressor (4) for compressing air, a combustion chamber (10) with at least one burner for burning a fuel together with air from the compressor and a turbine (12), wherein bypass lines (20) are used for the transportation of air (A) from the compressor (4) to the combustion chamber (10) and said air (A) is injected in the combustion chamber (10) downstream of the at least one burner, wherein in each of the bypass lines (20) a bypass valve (24) is installed, the method comprising the following steps:
- the temperature of an exhaust gas (E) of the turbine (12) is measured using a plurality of temperature sensors (27), wherein the temperature sensors (27) are mounted at different circumferential positions (28) and for each circumferential position two temperature sensors (27) are provided, one at a radially inner position (28a) and one at a radially outer position (28b),
- starting with all bypass valves (24) being in a closed position, all bypass valves (24) are opened one by one during operation of the gas turbine plant (2),
- whenever a bypass valve (24) is opened at all circumferential positions (28), the signals of the radially inner temperature sensors (27) and the signals of the corresponding radially outer temperature sensors (27) at the same circumferential position (28) are evaluated, and
- in case that the temperature measured at the radially outer positions (28b) increases and/or the temperature measured at the radially inner positions (28a) decreases, an alert signal is generated. This method provides reliable diagnosis of the bypass valves (24) with respect to proper installation and hence proper operation settings of the gas turbine plant (2). FIG 1

## Description

The present invention relates to a method for monitoring the function of bypass valves in a gas turbine plant comprising a compressor for compressing air, a combustion chamber with at least one burner for burning a fuel together with air from the compressor and a turbine, wherein bypass lines are used for the transportation of air from the compressor to the combustion chamber and said air is injected in the combustion chamber downstream of the at least one burner, wherein in each of the bypass lines a bypass valve is installed. The present invention further relates to a gas turbine plant comprising a compressor for compressing air, a combustion chamber with at least one burner for burning a fuel together with air from the compressor, and a turbine.

Gas turbine plants are usually optimized in performance, emissions and life time at full load. At part load, the flame temperature in the combustion zone needs to be kept close to full load conditions to keep the emissions as low as possible. In some gas turbine plants air bypass lines with bypass valves are installed to inject compressor air into the combustion chamber downstream, away from the burner. The bypass valve may be selectively actuated into an opened or a closed position. However, there is a risk that the bypass valves are installed incorrectly, causing them to be fully open, when they are supposed to be closed and be fully closed, when they are supposed to be open. An open bypass valve at full load may cause damages to the turbine and it is therefore of high importance that the bypass valves are installed and operated correctly.

In order to diagnose whether a gas turbine plant has problems with the bypass system, the exhaust gas temperature of the turbine is monitored. The exhaust gas temperature is measured at a plurality of circumferential positions and for each circumferential position there are two radial locations for the temperature sensors. To determine, if all bypass valves are installed correctly, the exhaust gas temperature in the radially outer position is compared with the temperature in the corresponding radially inner position when all bypass valves are open. When the bypass valves are open, normally the average temperature in the radially inner position is higher than in the radially outer position. Anything else would mean that at least one bypass valve is defective or incorrectly installed. Yet, the accuracy of this measurement might be impaired as there is a normal spread in the temperature difference and what may look like an incorrectly actuated bypass valve may be just the normal spread.

It is an object of the invention to provide a method for monitoring the function of bypass valves in a gas turbine plant, which method overcomes the above-mentioned disadvantages of the known prior art and is reliable with respect to proper operation settings of the gas turbine plant.

The object of the invention is achieved by the independent claims. The dependent claims describe advantageous developments and modifications of the invention.

In accordance with the invention there is provided a method for monitoring the function of bypass valves in a gas turbine plant comprising a compressor for compressing air, a combustion chamber with at least one burner for burning a fuel together with air from the compressor and a turbine, wherein bypass lines are used for the transportation of air from the compressor to the combustion chamber and said air is injected in the combustion chamber downstream of the at least one burner, wherein in each of the bypass lines a bypass valve is installed, the method comprising the following steps:
- the temperature of an exhaust gas of the turbine is measured using a plurality of temperature sensors, wherein the temperature sensors are mounted at different circumferential positions and for each circumferential position two temperature sensors are provided, one at a radially inner position and one at a radially outer position,
- starting with all bypass valves being in a closed position, all bypass valves are opened one by one during operation of the gas turbine plant,
- whenever a bypass valve is opened, at all circumferential positions the signals of the radially inner temperature sensors and the signals of the corresponding radially outer temperature sensors at the same circumferential position are evaluated, and
- in case that the temperature measured at the radially outer positions increases and/or the temperature measured at the radially inner positions decreases, an alert signal is generated.

In accordance with the invention there is provided also a gas turbine plant comprising a compressor for compressing air, a combustion chamber with at least one burner for burning a fuel together with air from the compressor and a turbine, wherein bypass lines are used for transporting air from the compressor to the combustion chamber and said air is injected in the combustion chamber downstream of the at least one burner, wherein in each of the bypass lines a bypass valve is installed, further comprising:
- a plurality of temperature sensors for measuring the temperature of an exhaust gas of the turbine, wherein the temperature sensors are mounted at different circumferential positions and for each circumferential position two temperature sensors are provided, one at a radially inner position and one at a radially outer position, and
- a control unit suitable for closing all bypass valves and opening the closed bypass valves one by one,
- an evaluation unit suitable for evaluating the signals of the radially inner temperature sensors and the radially outer temperature sensors at all circumferential positions and for generating an alert signal when the temperature measured at the radially outer positions increases and/or the temperature measured at a radially inner positions decreases.

In a non-limiting embodiment the gas turbine plant is a stationary, industrial plant having performance up to 60 MW, which means that it is considered a small a medium gas turbine. Yet, the method can be applied for large gas turbines as well.

The invention is based on a stepwise approach for the diagnose of the bypass valves. For this reason, at least two bypass lines with a bypass valve each are provided, so that the bypass valves can be opened one by one at high load. The control unit may first close the bypass valves during operation of the gas turbine plant in order to carry out the method, or the valves may remain in the closed position during the start-up of the gas turbine plant. While opening each bypass valve, the control unit is comparing the temperature difference between the average temperatures determined by the sensor couples in the radially inner and in the radially outer positions. If the measurement shows that the radially inner positions in average become warmer and/or the radially outer positions in average become colder, all bypass valves are mounted correctly; yet if the temperature in the radially inner positions decreases and/or the temperature in the radially outer positions increases, at least one bypass valve is mounted incorrectly. The control unit will then generate an alert signal, e.g. in form of a text message for the operator, after the check has been performed, to indicate if the valves are installed correctly or if some valve is defective or incorrectly installed.

According to a preferred embodiment, when generating the alert signal, the location of an incorrectly installed bypass valve is indicated. This means that the control unit not only gives information about malfunctioning bypass valves, but it also can determine and display which one of the plurality of bypass valves is incorrectly installed. This is only possible because of the time resolution applied when opening the bypass valves. After each valve is opened, measurements are carried out and if deviations from the normal conditions are detected, it is known that the defective bypass valve is the last bypass valve that was opened. One big advantage of this approach is that the bypass valve installation can be verified during operation and if one valve is incorrectly mounted, direct feedback is given about which valve it is. Another advantage is the high certainty with which a malfunction of a bypass valve is detected, as the incorrectly installed valve can be directly determined. These benefits reduce time at site significantly and increase the confidence when determining if one valve is incorrectly installed.

According to another preferred embodiment, the verification of the bypass valves function is carried out at high load of the gas turbine plant, in particular at base load or at load equal to or greater than 70% of base load. At high load it is easier to verify the proper functioning of the bypass valves, primarily because the effects of the bypass valves are more clearly indicated with a higher air flow through the gas turbine, so that the difference in the exhaust temperatures can be determined more reliably.

According to yet another preferred embodiment, the method is carried out during start-up or during maintenance of the gas turbine plant, i.e. outside normal operation of the gas turbine plant. In general, for new gas turbine plants the method is carried out during start-up and the bypass valves are calibrated from the very beginning. For gas turbine plants which are already in use, the calibration of the bypass valve will be done during service or maintenance work. Thus, the operation of the plant is not influenced by the calibration work on the bypass valves.

Preferably, the temperature of the exhaust gas of the turbine is measured at more than ten circumferential positions, in particular at sixteen circumferential positions. Due to the high number of measuring points in the circumferential direction, a high special resolution is given, and the measurement results are verified by the other sensors. Yet, even less than ten circumferential positions ot more than sixteen circumferential positions may be provided, in general any number of thermal sensors may be applied.

Still preferably, the air is transported to the combustion chamber using between two and eight bypass lines, in particular using five bypass lines. Accordingly, there are five bypass valves which proper function is to be tested. This method could be used for any number of valves. Five bypass valves are considered a good compromise between cost and design requirement.

Embodiments of the invention are now described, by way of example only, with reference to the accompanying drawings, of which:
- Figure 1: shows a schematic overview of air bypass valves of a gas turbine plant; and
- Figure 2: shows a schematic cross-section view of a turbine casing with sixteen measuring points for temperature sensors.

The illustration in the drawings is in schematic form. It is noted that in different figures, similar or identical elements may be provided with the same reference signs.

It should be noted that the use of "a" or "an" throughout this application does not exclude a plurality, and "comprising" does not exclude other steps or elements. Also elements described in association with different embodiments may be combined. It should also be noted that reference signs in the claims should not be construed as limiting the scope of the claims.

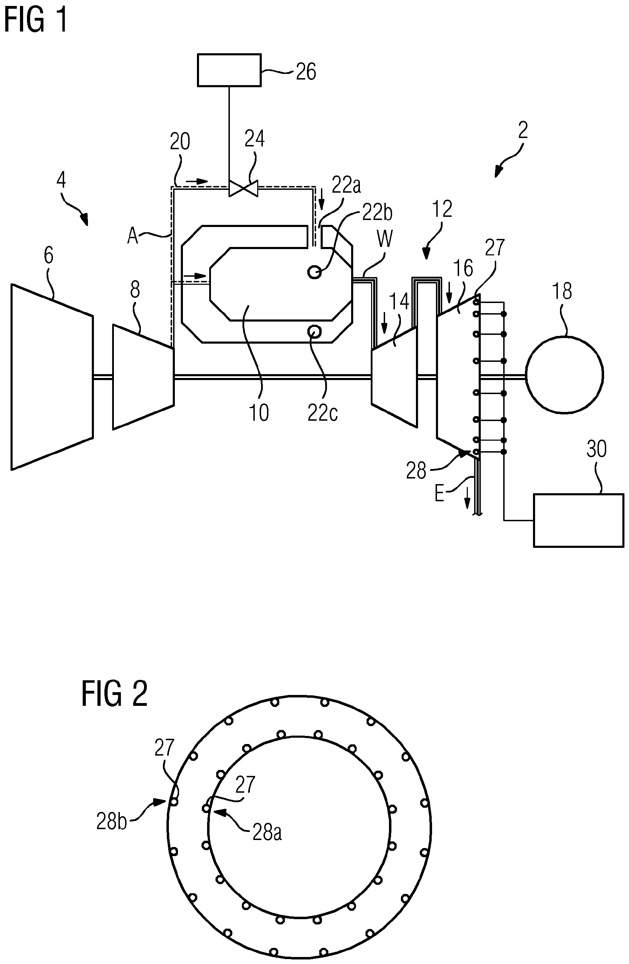

Figure 1 shows schematically a stationary gas turbine plant 2 with a compressor 4 for compressing air A, the compressor 4 comprising a low pressure compressor section 6 and a high pressure compressor section 8. The compressed air A is injected in a combustion chamber 10 and there burned by a burner (not shown in the drawing) together with a fuel to generate a working gas W for a turbine 12. The turbine 12 comprises a high pressure turbine section 14 and a low pressure turbine 16 section. The turbine 12 drives a generator 18. Once the working gas W has flown through the high pressure turbine 14 and a low pressure turbine 16, it leaves the turbine 12 as exhaust gas E.

Before entering the combustion chamber 10 some of the compressed air A is branched off e.g. for cooling purposes in a bypass line 20. This air A is injected in the combustion chamber 10 downstream of the burner through an aperture 22a in the wall of the combustion chamber 10. The aperture 22a is preferably designed as a nozzle. In FIG 1 only one a bypass line 20 is shown, yet there could be more a bypass lines 20, in particular five bypass lines 20 are provided, wherein through each of them air A is transported and injected into the combustion chamber 10 via further apertures 22b, 22c, etc. In each of the bypass lines 20 a bypass valve 24 is installed. The position of each bypass valve 24 is controlled independently by a control unit 26.

The temperature of the exhaust gas E of the turbine 12 is measured using a plurality of temperature sensors, wherein the temperature sensors 28 are mounted at different circumferential positions 28 on the casing of the low pressure turbine section 16. Alternatively, the temperature sensors 28 could be mounted on the high pressure turbine section 14. The temperature sensors 27 can be any kind of temperatures sensors suitable for high temperature environment, such as e.g. thermocouples or pyrometers. As shown in FIG 2, there are sixteen circumferential positions 28 for the sensors 27 and in each circumferential position 28 a sensor couple comprising two temperature sensors 27, is installed, one sensor 27 at a radially inner position 28a and one sensor 27 at a radially outer position 28b. Also, an evaluation unit 30 is provided evaluating the signal of all sensors 27. In FIG 1 the evaluation unit 30 is shown as a separate unit, yet the evaluation unit 30 may also be part of the control unit 26, or at least there might be communication between the evaluation unit 30 and the control unit 26, if they are not part of the same functional element.

During operation of the gas turbine plant 2, at base load or at a high part load, i.e. 70% of base load or higher, the function of the bypass valves 24 is tested. For this purpose, the bypass valves 24, which until then have been in the closed position, are opened one by one by means of the control unit 26 and after each bypass valve 24 is opened, the signals of the sensors 27 are evaluated. During the evaluation, changes of the average temperature in the radially inner positions 28a as well as of the average temperature in the radially outer positions 28b are monitored. When an increase of the temperature measured by the radially outer sensors 28b is detected or a decrease of the temperature measured by the radially inner sensors 28a is detected, this means that the last bypass valve 24 that was opened, is not installed correctly. In this case an alert signal is generated. The location of the incorrectly installed bypass valve 24 can be tracked down, because it is known which of the five bypass valves 23 was the last bypass valve 24 that was opened and that caused the change from the normal conditions. Optionally, the location of the incorrectly installed bypass valve 24 is indicated in the alert signal.

## Claims

1. Method for monitoring the function of bypass valves (24) in a gas turbine plant (2) comprising a compressor (4) for compressing air, a combustion chamber (10) with at least one burner for burning a fuel together with air from the compressor and a turbine (12), wherein bypass lines (20) are used for the transportation of air (A) from the compressor (4) to the combustion chamber (10) and said air (A) is injected in the combustion chamber (10) downstream of the at least one burner, wherein in each of the bypass lines (20) a bypass valve (24) is installed,
the method comprising the following steps:
- the temperature of an exhaust gas (E) of the turbine (12) is measured using a plurality of temperature sensors (27), wherein the temperature sensors (27) are mounted at different circumferential positions (28) and for each circumferential position two temperature sensors (27) are provided, one at a radially inner position (28a) and one at a radially outer position (28b),
- starting with all bypass valves (24) being in a closed position, all bypass valves (24) are opened one by one during operation of the gas turbine plant (2),
- whenever a bypass valve (24) is opened, at all circumferential positions (28) the signals of the radially inner temperature sensors (27) and the signals of the corresponding radially outer temperature sensors (27) at the same circumferential position (28) are evaluated, and
- in case that the temperature measured at the radially outer positions (28b) increases and/or the temperature measured at the radially inner positions (28a) decreases, an alert signal is generated.

2. Method according to claim 1,
wherein, when generating the alert signal, the location of an incorrectly installed bypass valve is indicated.

3. Method according to any of the preceding claims,
wherein the verification of the bypass valves function is carried out at high load of the gas turbine plant (2), in particular at base load or at load equal to or greater than 70% of base load.

4. Method according to any of the preceding claims, wherein the method is carried out during start-up or during maintenance of the gas turbine plant (2).

5. Method according to any of the preceding claims,
wherein the temperature of the exhaust gas (E) of the turbine (12) is measured at more than ten circumferential positions (28), in particular at sixteen circumferential positions (28) .

6. Method according to any of the preceding claims,
wherein the air (A) is transported to the combustion chamber (10) using between two and eight bypass lines (20), in particular five bypass lines (20).

7. Gas turbine plant (2) comprising a compressor for compressing air, a combustion chamber (10) with at least one burner for burning a fuel together with air from the compressor (4) and a turbine (12), wherein bypass lines (20) are used for transporting air (A) from the compressor (4) to the combustion chamber (10) and said air (A) is injected in the combustion chamber (10) downstream of the at least one burner, wherein in each of the bypass lines (20) a bypass valve (24) is installed, further comprising:
- a plurality of temperature sensors (27) for measuring the temperature of an exhaust gas (E) of the turbine (12), wherein the temperature sensors (27) are mounted at different circumferential positions (28) and for each circumferential position (28) two temperature sensors (27) are provided, one at a radially inner position (28a) and one at a radially outer position (28b), and
- a control unit (26) suitable for closing all bypass valves (20) and opening the closed bypass valves (24) one by one,
- an evaluation unit (30) suitable for evaluating the signals of the radially inner temperature sensors (27) and the radially outer temperature sensors (27) at all circumferential positions (28) and for generating an alert signal when the temperature measured at the radially outer positions (28b) increases and/or the temperature measured at a radially inner positions (28a) decreases.

8. Gas turbine plant (2) according to claim 7,
wherein the evaluation unit (30) is designed for indicating the location of an incorrectly installed valve (24), when the the alert signal is generated.

9. Gas turbine plant (2) according to any of the claims 7 or 8,
comprising sensors (27) at more than ten circumferential positions (28), in particular at sixteen circumferential positions (28).

10. Gas turbine plant (2) according to any of the claims 7 to 9,
comprising between two and eight bypass lines (20), in particular five bypass lines (20) for the transportation of air (A) to the combustion chamber (10).
